# EUROPÄISCHE PATENTANMELDUNG

(11) **EP 4 722 997 A1**
(43) Veröffentlichungstag der Anmeldung: **08.04.2026**
(21) Anmeldenummer: 25203294.1
(22) Anmeldetag: 19.09.2025
(51) Int. Cl.: G06N 20/20

(54) **COMPUTER-IMPLEMENTIERTES VERFAHREN ZUM DYNAMISCHEN ANPASSEN EINES ABSTIMMUNGSVERFAHRENS FÜR EIN TECHNISCHES SYSTEM**

(30) Priorität: 01.10.2024 DE 102024209598
(71) Anmelder: Siemens Aktiengesellschaft, 80333 München (DE)
(72) Erfinder: Zeller, Marc, 80997 München (DE)
(74) Vertreter: Siemens Patent Attorneys

(57) **Zusammenfassung**

Die Erfindung betrifft ein computer-implementiertes Verfahren zum dynamischen Anpassen eines Abstimmungsverfahrens, aufweisend die Schritte: a. Bereitstellen von einer Mehrzahl von trainierten Machine-Learning-Modellen (S1); wobei die Mehrzahl der Machine-Learning-Modelle auf mindestens einem Trainingsdatensatz mit einer Mehrzahl von Datenelementen trainiert wird; b. Anwenden jedes trainierten Machine-Learning-Modells der Mehrzahl der trainierten Machine-Learning-Modelle auf einen jeweiligen Eingabedatensatz (S2), wobei der Eingabedatensatz mindestens ein Datenelement aufweist; wobei das mindestens eine Datenelement mittels Maschinellem Lernen einem Kennzeichen zugeordnet wird; c. Bestimmen von mindestens einem gekennzeichneten Datenelement aus der Mehrzahl der gekennzeichneten Datenelemente durch das Abstimmungsverfahren auf Basis der Mehrzahl der gekennzeichneten Datenelemente (S3); d. Ermitteln einer Datenabweichung zwischen dem mindestens einen Eingabedatensatz und dem mindestens einen Trainingsdatensatz (S4); e. Anpassen des Abstimmungsverfahrens auf Basis des bestimmten mindestens einen gekennzeichneten Datenelements, der Mehrzahl der gekennzeichneten Datenelemente und in Abhängigkeit von der ermittelten Datenabweichung (S5); und f. Bereitstellen des angepassten Abstimmungsverfahrens (S6).

Ferner betrifft die Erfindung eine Anpassungsvorrichtung, ein entsprechendes Computerprogrammprodukt und ein entsprechendes computerlesbares Speichermedium.

## Beschreibung

### 1. Technisches Gebiet

Die Erfindung betrifft ein computer-implementiertes Verfahren zum dynamischen Anpassen eines Abstimmungsverfahrens für ein technisches System. Ferner ist die Erfindung auf eine entsprechende Anpassungsvorrichtung, ein entsprechendes Computerprogrammprodukt und ein entsprechendes computerlesbares Speichermedium gerichtet.

### 2. Stand der Technik

Das autonome Fahren gewinnt zunehmend an Bedeutung. Diverse autonome Fahrzeuge, wie Autos und Züge, sind in diesem Zusammenhang aus dem Stand der Technik bekannt. Der Automatisierungsgrad sowie die Komplexität der autonomen Fahrzeuge nehmen ebenfalls erheblich zu. Die autonomen Fahrzeuge sind dazu eingerichtet fahrerlos betrieben zu werden. Sie sind folglich selbst-fahrend.

Im Zuge der Weiterentwicklung der autonomen Züge und deren Steuerungssysteme wird die Steuerung des Zugs Schritt für Schritt vom Triebfahrzeugführer (auch Zugführer genannt) auf ein technisches System mit automatisierter Steuerung (auch Zugsteuerung genannt) übertragen. Hindernisse im Gleisbett von Zügen stellen bis heute schwerwiegende Risiken im Zugverkehr dar. Die Triebfahrzeugführer müssen mitunter sehr schnell reagieren, um einen größeren Schaden von Zug und Passagieren abzuwenden. Hindernisse können Teile von durch Unwetter beschädigter Streckeneinrichtung wie Oberleitungen oder Masten sein, aber auch umgefallene Bäume oder Personen. Eine zuverlässige automatisierte Hinderniserkennung und die Einleitung entsprechender Gegenmaßnahmen, wie eine Schnellbremsung, stellen bis heute eine große Herausforderung dar.

Üblicherweise werden gemäß dem Stand der Technik oft sogenannte Ensemble von Machine-Learning-Modellen für die Objekterkennung oder Hinderniserkennung eingesetzt. Hierbei werden eine endliche Menge von unterschiedlichen Machine-Learning-Modellen verwendet, die alle auf den gleichen Eingabedaten die gleiche Aufgabe ausführen, wie die Objekterkennung auf Bilddaten. Beim sogenannten Abstimmungsverfahren (engl. Voting-Verfahren) wird das im Ensemble am häufigsten vorhergesagte Ergebnis als Ergebnis des Ensembles verwendet. Nachteilig daran ist jedoch, dass die Schwellwerte für die Abstimmungsverfahren bereits während der Entwicklung festgelegt werden und somit vor-definiert sind. Sie können zur Laufzeit nicht mehr geändert werden und sind somit feste Schwellwerte bzw. einprogrammierte Schwellwerte. Im Fall von Datenabweichungen kann daher die Performanz eines Ensembles signifikant abweichen und schlechter werden.

Daher besteht ein Bedarf daran ein Abstimmungsverfahren auch nachträglich, zur Laufzeit, sowie an geänderte Situationen, Gegebenheiten, Umstände oder Bedingungen anpassen zu können.

Die vorliegende Erfindung stellt sich daher die Aufgabe ein computer-implementiertes Verfahren zum dynamischen Anpassen eines Abstimmungsverfahrens bereitzustellen, welches effizienter und zuverlässiger ist.

### 3. Zusammenfassung der Erfindung

Die oben genannte Aufgabe wird erfindungsgemäß durch ein computer-implementiertes Verfahren zum dynamischen Anpassen eines Abstimmungsverfahrens für ein technisches System gelöst, umfassend die Schritte:
a. Bereitstellen von einer Mehrzahl von trainierten Machine-Learning-Modellen; wobei die Mehrzahl der Machine-Learning-Modelle auf mindestens einem Trainingsdatensatz mit einer Mehrzahl von Datenelementen trainiert wird;
b. Anwenden jedes trainierten Machine-Learning-Modells der Mehrzahl der trainierten Machine-Learning-Modelle auf einen gemeinsamen Eingabedatensatz, wobei
   der Eingabedatensatz mindestens ein Datenelement aufweist; wobei
   das mindestens eine Datenelement mittels Maschinellem Lernen einem Kennzeichen zugeordnet wird;
c. Bestimmen von mindestens einem gekennzeichneten Datenelement aus der Mehrzahl der gekennzeichneten Datenelemente durch das Abstimmungsverfahren auf Basis der Mehrzahl der gekennzeichneten Datenelemente;
d. Ermitteln einer Datenabweichung zwischen dem Eingabedatensatz und dem mindestens einen Trainingsdatensatz;
e. Anpassen des Abstimmungsverfahrens auf Basis des bestimmten mindestens einen gekennzeichneten Datenelements, der Mehrzahl der gekennzeichneten Datenelemente und in Abhängigkeit von der ermittelten Datenabweichung; und
f. Bereitstellen des angepassten Abstimmungsverfahrens.

Dementsprechend ist die Erfindung auf ein computer-implementiertes Verfahren zum dynamischen Anpassen eines Abstimmungsverfahrens gerichtet. Das Abstimmungsverfahren kann auch als "Votingverfahren" bezeichnet werden. Die Anpassung erfolgt dabei dynamisch, folglich wenn ein Ereignis eintritt oder sich etwas ändert. Beispielsweise ändert sich etwas in der Umgebung des technischen Systems, wie Concept Drifts etc. Mit anderen Worten wird das computer-implementierte Verfahren durch ein Ereignis (Engl. "Event") getriggert oder initiiert.

Im ersten Verfahrensschritt wird die Mehrzahl der trainierten Machine-Learning-Modelle bereitgestellt. Die Machine-Learning-Modelle können auch als Modelle basierend auf Maschinellem Lernen oder maschinelle Lernmodelle bezeichnet werden. Sie wurden bereits auf dem Trainingsdatensatz trainiert, bevorzugt auf einem gemeinsamen Trainingsdatensatz und können unmittelbar angewendet werden. Der Trainingsdatensatz weist die Mehrzahl der Datenelemente auf, wie Bilder, Videos oder Texte. Mit anderen Worten sind die Modelle bereits angelernt. Das technische System kann beispielsweise als industrielle Anlage oder autonomes Fahrzeug ausgebildet sein.

Die Eingabedaten können über eine oder mehrere Eingabeschnittstellen empfangen werden. Zusätzlich oder alternativ können die Ausgabedaten auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen den Recheneinheiten sicher. Die Daten können bidirektional ausgetauscht werden ohne Datenstau.

Die Machine-Learning-Modelle werden auf den gemeinsamen Eingabedatensatz mit dem mindestens einen Datenelement angewendet. Mit anderen Worten erfolgt in diesem zweiten Verfahrensschritt eine Kennzeichenzuordnung mittels Maschinellem Lernen. Jedem Datenelement wird ein entsprechendes Kennzeichen zugewiesen. Der Verfahrensschritt resultiert in einer Mehrzahl gekennzeichneter Datenelemente für die Mehrzahl der Machine-Learning-Modelle. Das Machine-Learning-Modell kann beispielsweise die Eingabedaten, wie Bilddaten, Textdaten oder Videodaten klassifizieren. Mit anderen Worten kann eine Objektklassifizierung oder Objekterkennung mittels Maschinellem Lernen erfolgen. Das Ergebnis kann eine Liste mit klassifizierten Objekten sein.

Aus der Mehrzahl der gekennzeichneten Datenelemente wird mindestens ein gekennzeichnetes Datenelement festgelegt oder ausgewählt mit Hilfe des Abstimmungsverfahrens, welches für die nachfolgende Anpassung des Abstimmungsverfahrens herangezogen wird.

Weiterhin wird die Datenabweichung zwischen den beiden Datensätzen ermittelt und für die Anpassung herangezogen. Dabei kann die Datenabweichung zwischen dem Eingabedatensatz und dem Trainingsdatensatz vorliegen, wenn sich die Datensätze voneinander unterscheiden bzw. nicht übereinstimmen. Weiterhin kann die Datenabweichung vorliegen, wenn sich die Eingabedaten derart ändern, dass sie einen Einfluss auf die Performanz haben. Die Datenabweichung kann auch als "Datendrift", Datenverschiebung oder Datendiskrepanz bezeichnet werden.

Im weiteren Verfahrensschritt erfolgt die Anpassung des Abstimmungsverfahrens unter Berücksichtigung des bestimmten gekennzeichneten Datenelements, der Mehrzahl der gekennzeichneten Datenelemente und der ermittelten Datenabweichung.

Im letzten Verfahrensschritt wird das angepassten Abstimmungsverfahren als Ausgabe des computer-implementierten Verfahrens bereitgestellt.

Die vorliegende Erfindung stellt dadurch sicher, dass das Abstimmungsverfahren für das technische System zuverlässig und effizient angepasst wird sowie die Abstimmung dabei dynamisch und flexible erfolgt. Mit anderen Worten ermöglicht die Erfindung, dass das Abstimmungsverfahren an die aktuelle Situation des technischen Systems angepasst wird.

Dadurch wird die Leistung bzw. die Performanz des zugrundeliegenden technischen Systems signifikant erhöht. Beispielsweise wird die Objekterkennung bei autonomen Fahrzeugen um ein erhebliches Maß verbessert. Hindernisse, wie Personen auf der Fahrstrecke oder dem Gleisbett werden besser erkannt und Gefahren folglich zuverlässig verhindert bzw. zumindest reduziert. Darüber hinaus werden die Verfügbarkeit, die Robustheit und die Zuverlässigkeit des technischen Systems verbessert, da zur Laufzeit auf unerwartet auftretende Ereignisse oder Situationen reagiert werden kann. Weiterhin werden jegliche Datenabweichungen zuverlässig und effizient erkannt sowie unmittelbar und folglich zeitnah behandelt.

Sofern nicht anders angegeben, können alle Verfahrensschritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Verfahrensschritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Das technische System kann beispielsweise eine Maschine oder Anlage oder mehrere physisch, virtuell und/oder funktional verbundene Maschinen und/oder Anlagen beinhalten. Beispielhafte aber nicht beschränkende Anwendungsgebiete sind Systeme im Bereich der Energietechnik, etwa Anlagen und/oder Maschinen zur Energieerzeugung, zur Energieumwandlung und/oder zum Energietransport. Weitere nicht beschränkende Anwendungsgebiete liegen im Bereich der Mobilität, etwa im Eisenbahnverkehr, sodass das System beispielsweise Zugkomponenten, Zugmaschinen, Gleisanlagen oder Teile davon, Personenkraftwagen, Lastkraftwagen und so weiter beinhalten kann, im Bereich der Industrieproduktion, sodass das System beispielsweise Produktionsmaschinen oder -anlagen, Fertigungsmaschinen oder - anlagen, Testvorrichtungen, Überwachungsanlagen, Fördermaschinen oder -anlagen, verfahrenstechnische Anlagen und so weiter beinhalten kann. Weitere nicht beschränkende Anwendungsgebiete liegen im Bereich der Medizintechnik, so dass das System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme und so weiter beinhalten kann. Das System kann auch eines oder mehrere Robotersysteme beinhalten.

In einer Ausgestaltung ist das Machine-Learning-Modell ein Modell zum überwachten Maschinellen Lernen, bevorzugt ein Neuronales Netzwerk. Dementsprechend ist das Machine-Learning-Modell ein Modell zum überwachten Maschinellen Lernen, wie Neuronales Netzwerk. Alternativ oder zusätzlich kann auch ein Reinforcement Learning-Modell angewendet werden. Alternativ können auch Machine-Learning Modelle zum unüberwachten Lernen eingesetzt werden. Das Machine-Learning-Modell kann vorteilhafterweise in Abhängigkeit vom zugrunde liegenden technischen System, der Nutzerpräferenzen und/oder des Anwendungsfalls flexibel ausgewählt werden.

In einer weiteren Ausgestaltung ist die Mehrzahl der Machine-Learning-Modelle als Ensemble zur Ensemble-Prognose ausgebildet. Dementsprechend sind die Machine-Learning-Modelle für die Ensemble-Vorhersage eingerichtet. Das Ensemble kann folglich mehrere Vorhersagen der Machine-Learning-Modelle umfassen. Das Ensemble hat sich hinsichtlich einer besseren Vorhersageperformanz und Robustheit gegenüber einzelnen Modellen als besonders vorteilhaft erwiesen.

In einer weiteren Ausgestaltung wird jedes Machine-Learning-Modell für die gleiche Aufgabe und auf Basis eines gemeinsamen Trainingsdatensatzes trainiert. Dies stellt sicher, dass die einzelnen Modelle des Ensembles keine zu großen Unterschiede in der Vorhersageleistung haben, und so ein Modell die anderen Modelle im Ensemble dominieren könnte.

In einer weiteren Ausgestaltung weist der Trainingsdatensatz und/oder der Eingabedatensatz Bilddaten auf, ist das mindestens eine Datenelement ein Bild und/oder die Aufgabe ist eine Objekterkennung. Dementsprechend sind die Machine-Learning-Modelle für die eine gemeinsame bzw. dieselbe Vorhersage oder Aufgabe, wie beispielsweise die Objektklassifizierung oder die Objekterkennung der oben genannten Bilddaten eingerichtet und wurden auf dem gemeinsamen bzw. demselben Trainingsdatensatz angelernt, wie gleicher Bilddatensatz. Folglich kann beispielsweise eine Objekterkennung auf dem gleichen Bild durchgeführt werden. Mit anderen Worten erfolgt eine Objekterkennung mittels maschinellem Lernen auf Bilddaten.

In einer weiteren Ausgestaltung basiert das Abstimmungsverfahren auf Maschinellem Lernen und/oder verwendet mindestens einen vordefinierten Schwellwert zur Abstimmung. Das Abstimmungsverfahren kann als ein Verfahren mit festen Schwellwerten ausgebildet sein, wie Bejahend (engl. "Affirmative), Konsens (engl. "Consensus"), und Einstimmig (engl. "Unanimous"). Die Schwellwerte werden dementsprechend vordefiniert oder festgelegt.

Beispielhafte Abstimmungsverfahren mit den festen Schwellwerten sind:
Bejahend (engl. "Affirmative): Falls mindestens eines der Machine-Learning-Modelle vorhersagt, dass ein Bild ein Objekt aufweist, wird eine solche Erkennung als gültig angesehen.
Konsens (engl. "Consensus"): Damit ein Objekt erkannt wird, müssen die meisten bzw. muss die Mehrheit der Mehrzahl der Machine-Learning-Modelle e.g. im Ensemble übereinstimmend das Objekt erkennen.
Einstimmig (engl. "Unanimous"): Damit ein Objekt erkannt wird, müssen alle Machine-Learning-Modelle der Mehrzahl der Machine-Learning-Modelle e.g. im Ensemble das Objekt erkannt haben.
Beispielhafte feste Schwellwerte sind Schwellwerte für eine Schnittmenge über Vereinigung (engl. "Intersection over Union") und für Konfidenz-Werte etc.

In einer weiteren Ausgestaltung liegt die Datenabweichung in Form einer Datenabweichungs-Bewertung oder einer Datenabweichungs-Punktzahl vor. Dementsprechend kann die Datenabweichung in unterschiedlichen Formen vorliegen. Steigt die Datenabweichungs-Punktzahl (engl. auch "Drift Score" genannt), deutet dies auf eine Datenabweichung hin.

In einer weiteren Ausgestaltung umfasst die Anpassung des Abstimmungsverfahrens weiterhin das Anpassen von mindestens einem Schwellwert des Abstimmungsverfahrens, wobei
der mindestens eine Schwellwert bevorzugt ein Schwellwert für eine Konfidenz und/oder eine Schnittmenge über Vereinigung ist (engl. "Intersection over Union"). Dementsprechend erfolgt eine Modifikation des Abstimmungsverfahrens, wie die Modifikation eines Schwellwertes oder mehrerer Schwellwerte. Die Anpassung kann dabei eine Erhöhung oder eine Verringerung eines Schwellwertes oder mehrerer Schwellwerte sein. Die Anpassung kann auch alternativ oder zusätzlich eine Entfernung eines Schwellwertes, mehrerer Schwellwerte oder Ergänzung um einen Schwellwert oder mehrere Schwellwerte umfassen. Alternativ oder zusätzlich kann das Abstimmungsverfahren auch durch ein anderes Abstimmungsverfahren ausgetauscht werden oder anderweitig modifiziert werden etc.

In einer weiteren Ausgestaltung weist das computer-implementierte Verfahren weiterhin auf:
- Ausgeben des angepassten Abstimmungsverfahrens und/oder zugehöriger Daten auf einer Anzeigeeinheit,
- Speichern des angepassten Abstimmungsverfahrens und/oder zugehöriger Daten in einer Speichereinheit, und/oder
- Übermitteln des angepassten Abstimmungsverfahrens und/oder zugehöriger Daten an eine Recheneinheit.

Dementsprechend können eine oder mehrere Maßnahmen nach der Bereitstellung des angepassten Abstimmungsverfahrens als Ausgabe des erfindungsgemäßen Verfahrens eingeleitet werden. Die Maßnahmen können gleichzeitig, nacheinander oder auch stufenweise durchgeführt werden.

Als erstes kann das angepasste Abstimmungsverfahren einem Nutzer oder einem Anwender auf einer Anzeigeeinheit einer Recheneinheit angezeigt werden. Das Abstimmungsverfahren kann um den Eingabedatensatz etc. ergänzt werden. Weiterhin kann das angepasste Abstimmungsverfahren gespeichert werden, das Verfahren selbst oder in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach dem Empfang ebenfalls weitere entsprechende Maßnahmen einleiten. Weitere Maßnahmen sind beispielsweise Steuerungsmaßnahmen hinsichtlich des technischen Systems.

Beispielsweise kann eine Recheneinheit nach erfolgter Freigabe das angepasste Abstimmungsverfahren oder eine Mitteilung über die Freigabe empfangen und in Abhängigkeit von dieser das technische System betreiben.

Dies hat den Vorteil, dass jegliche Maßnahmen auch zuverlässig und zeitnah umgesetzt werden.

Ferner betrifft die Erfindung eine Anpassungsvorrichtung mit mindestens einer Recheneinrichtung zum Durchführen des obigen Verfahrens.

Unter einer Recheneinheit oder auch elektronische Recheneinrichtung kann insbesondere ein Datenverarbeitungsgerät verstanden werden, das einen Verarbeitungsschaltkreis enthält. Die Recheneinheit kann demnach insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ein künstliches neuronales Netzwerk kann als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Computervision beschäftigt sich dabei insbesondere mit der automatischen Verarbeitung in Relation von visuellen Informationen. Das Ziel von Computervision ist es, Computersystemen beizubringen, Objekte, Personen, Szenen und Handlungen in digitalen Bildern und Videos zu erkennen, zu klassifizieren und darauf zu reagieren. Computervision-Systeme verwenden Algorithmen und Techniken aus dem Bereich des maschinellen Lernens, Mustererkennung und Signalverarbeitung, um visuelle Informationen zu verarbeiten und zu interpretieren. Dazu gehört insbesondere die Bildvorverarbeitung, die eine Verbesserung und Normalisierung von Bildern, zum Beispiel Rauschunterdrückung, Farbbalance, Winkelkorrektur und Skalierung umfasst.

Ein weiterer Teil ist die Merkmalsextraktion, welche die Erkennung und die Extraktion relevanter Merkmale aus Bildern, zum Beispiel Kanten, Texturen, Form und Farben umfasst. Ferner wird die Objekterkennung durchgeführt, welche insbesondere die Identifizierung und Klassifizierung von Objekten in den Bildern beinhaltet, zum Beispiel Gesichter, Fahrzeuge, Gebäude und Landschaften. Eine Szenenanalyse ist ebenfalls Teil, wobei die Analyse und Interpretation von Szenen, beispielsweise die Erkennung von Handlungen, Bewegungen und Beziehungen zwischen Objekten, umfasst. Der Einsatz von Algorithmen des maschinellen Lernens ist dabei insbesondere vorgesehen, um Computervision-Systeme zu trainieren und ihre Leistung zu verbessern. Computervision und somit auch das erfindungsgemäße Verfahren hat zahlreiche Anwendungen in verschiedenen Bereichen wie beispielsweise Robotik, Medizin, Landwirtschaft, Sicherheit, Unterhaltung, Verkehr und vielen anderen. Durch die Weiterentwicklung von Techniken und Algorithmen wird Computervision immer leistungsfähiger und kann komplexe Aufgaben automatisieren und vereinfachen, weshalb solche Techniken insbesondere im Bereich von Kraftfahrzeugen, insbesondere im Bereich von Zügen, zuverlässig eingesetzt werden können.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

Die Erfindung betrifft ferner ein computerlesbares Speichermedium.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Ansicht des Verfahrens gemäß einer Ausführung der Erfindung.

### 5. Beschreibung der bevorzugten Ausführungsformen

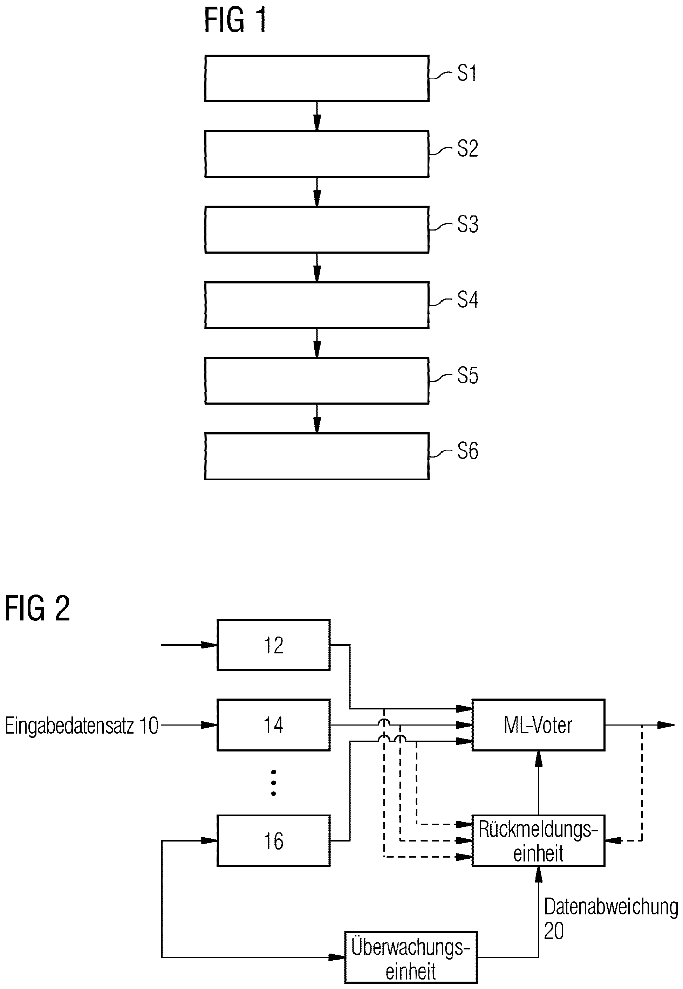

Im Folgenden werden bevorzugte Ausführungsformen der vorliegenden Erfindung in Bezug auf die Figur 1 beschrieben. Figur 1 stellt ein Ablaufdiagramm des erfindungsgemäßen Verfahrens mit den Verfahrensschritten S1 bis S6 schematisch dar.

Im ersten Verfahrensschritt wird die Mehrzahl der trainierten Machine-Learning-Modelle 12, 14, 16 bereitgestellt S1. Die Mehrzahl der Machine-Learning-Modelle 12, 14, 16 wird auf dem mindestens einen Trainingsdatensatz trainiert. Jedes trainierte Machine-Learning-Modell der Mehrzahl der trainierten Machine-Learning-Modelle wird auf den gemeinsamen Eingabedatensatz angewendet S2. Der Eingabedatensatz 10 weist das mindestens eine Datenelement auf. Das mindestens eine Datenelement wird mittels Maschinellem Lernen dem Kennzeichen zugeordnet. Das mindestens eine gekennzeichnete Datenelement wird aus der Mehrzahl der gekennzeichneten Datenelemente durch das Abstimmungsverfahren auf Basis der Mehrzahl der gekennzeichneten Datenelemente bestimmt S3. Die Datenabweichung 20 wird zwischen dem Eingabedatensatz 10 und dem mindestens einen Trainingsdatensatz ermittelt S4. Weiterhin wird das Abstimmungsverfahren auf Basis des bestimmten mindestens einen gekennzeichneten Datenelements, der Mehrzahl der gekennzeichneten Datenelemente und in Abhängigkeit von der ermittelten Datenabweichung 20 angepasst S5. Im letzten Verfahrensschritt wird das angepasste Abstimmungsverfahren bereitgestellt S6.

Figur 2 zeigt eine schematische Ansicht des Verfahrens gemäß einer Ausführung der Erfindung.

Der Machine-Learning-basierte Voter (kurz "ML-Voter") gemäß Figur 2 kann kontinuierlich lernen und somit die Schwellwerte des Abstimmungsverfahrens dynamisch anpassen. Die Anpassung kann dabei erfolgen, falls sich eine Situation ändert oder ein Ereignis eintritt. Beispielsweise ändert sich die Umgebung des technischen Systems (z.B. "Concept Drift"). Unter dem Begriff "Concept Drift" im Bereich des Maschinellen Lernens wird verstanden, dass sich die statistischen Eigenschaften der Zielvariablen, die ein Modell vorherzusagen versucht, im Laufe der Zeit unvorhergesehen ändern. Der ML-Voter kann während der Entwicklung trainiert werden oder hat alternativ feste Schwellwerte vorgegeben. Der ML-Voter kann basierend auf den Ausgaben der Machine-Learning-Modelle 12, 14, 16 entscheiden, welche Ausgabe er weitergibt.

Zusätzlich zum ML-Voter gibt es gemäß Figur 2 zwei weitere technische Komponenten, nämlich die Überwachungseinheit und die Rückmeldungseinheit, um den ML-Voter kontinuierlich an die aktuelle Situation des technischen Systems und folglich dynamisch anzupassen.

Die Überwachungseinheit ist dazu eingerichtet die Datenabweichung 20 zu erkennen, in dem er den Eingabedatensatz 10 der Machine-Learning-Modelle 12, 14, 16 gegen den Trainingsdatensatz der Machine-Learning-Modelle oder des ML-Voters (bsp. falls dieser ML-basiert ist) vergleicht. Die Überwachungseinheit kann die Datenabweichungs-Punktzahl (engl. "Drift Score" genannt) ermitteln.

Die Rückmeldungseinheit kann als Eingabe die Datenabweichung 20, die Ausgabe aller Machine-Learning-Modelle 12, 14, 16 sowie die Ausgabe des ML-Voters erhalten. Die Rückmeldungseinheit kann basierend auf diesen Daten die Anpassung des Abstimmungsverfahrens durchführen, beispielsweise die Schwellwerte des ML-Voters modifizieren. Hierzu können die Daten über eine bestimmte Zeitspanne in der Rückmeldungseinheit gespeichert werden. Dadurch kann beispielsweise ein Gradient der Werte bestimmt werden.

Die Anpassung kann wie im Folgenden durchgeführt werden:
1. Steigt die ermittelte Datenabweichungs-Punktzahl, kann dies auf eine Datenverschiebung hindeuten. Die Schwellwerte für das ML-Voting werden gemäß einer Ausführungsform der Erfindung entsprechend der aktuellen Performanz der einzelnen Machine-Learning-Modelle 12, 14, 16 im Ensemble angepasst.
2. Steigt die Diskrepanz zwischen der Performanz einzelner Machine-Learning-Modelle 12, 14, 16 und der Performanz des gesamten Ensembles, werden die Schwellwerte gemäß einer Ausführungsform der Erfindung angepasst. Beispielsweise liegt eine Diskrepanz vor, falls die einzelnen Machine-Learning-Modelle 12, 14, 16 mehr oder signifikant mehr Objekte erkennen als der ML-Voter weitergibt.
3. Sinkt die Performanz eines Machine-Learning-Modells 12, 14, 16 des Ensembles, können die Schwellwerte im ML-Voter gemäß einer Ausführungsform der Erfindung entsprechend angepasst werden. Hierzu können die Konfidenzinformationen aus den einzelnen Machine-Learning-Modellen 12, 14, 16 verwendet werden.

Es kann gemäß einer Ausführungsform der Erfindung kontinuierlich überprüft werden, ob die Änderungen der Schwellwerte einen positiven oder negativen Effekt haben und entsprechend die Anpassung der Schwellwerte geregelt werden.

Anwendungsbeispiele:
Beispielsweise hat ein Ensemble mit drei unterschiedlichen Machine-Learning-Modellen 12, 14, 16 die gemeinsame Aufgabe Personen zuverlässig zu erkennen, wie bei einemAGV (Automated Guided Vehicle / fahrerloses Transportfahrzeug), einem fahrerlosen Zug oder in einer Fertigungsstraße. Der ML-Voter des Ensembles kann nach dem Consensus-Verfahren arbeiten und eine erkannte Person weitergeben, wenn zwei oder drei Machine-Learning-Modelle im Ensemble diese mit einer Konfidenz > 0.7 erkannt haben und die eine Schnittmenge über Vereinigung (engl. "Intersection over Union") der von den Modellen ausgegeben Bounding Boxen < 0.5 ist. Diese Werte können mittels Tests in der Entwicklung gefunden und fest in den ML-Voter einprogrammiert werden.

### Anwendungsbeispiel 1:

Die Datenabweichungs-Punktzahl, welche durch die Überwachungseinheit ermittelt wird, übersteigt einen Wert von 0.5 über den Zeitraum von 3h hinweg. Die Rückmeldungseinheit verringert daraufhin den Schwellwert für die Konfidenz aller drei Machine-Learning-Modelle 12, 14, 16 auf den Wert von 0.5.

### Anwendungsbeispiel 2:

Alle drei Machine-Learning-Modelle 12, 14, 16 erkennen im Schnitt 10 Personen über einen ganzen Tag hinweg. Der ML-Voter gibt jedoch nach 3h nur noch 3 der 10 Personen weiter. Daraufhin erhöht die Rückmeldungseinheit den Schwellwert für die Schnittmenge über Vereinigung auf 0.6.

### Anwendungsbeispiel 3:

Ein Machine-Learning-Modell 12 der drei Machine-Learning-Modelle 12, 14, 16 auf dem Ensemble liefert Ergebnisse mit der Zeit mit immer geringeren Konfidenz-Werte, während die Konfidenz-Werte der anderen beiden Machine-Learning-Modelle 14 und 16 hingegen konstant bleiben. Daraufhin reduziert die Rückmeldungseinheit den Konfidenz-Wert für das Machine-Learning-Modell 12 auf 0.5, beispielsweise nach 8h. Alternativ kann auch auf ein anderes Abstimmungsverfahren umgestellt werden.

## Patentansprüche

1. Computer-implementiertes Verfahren zum dynamischen Anpassen eines Abstimmungsverfahrens, aufweisend die Schritte:
a. Bereitstellen von einer Mehrzahl von trainierten Machine-Learning-Modellen (12, 14, 16) (S1); wobei
die Mehrzahl der Machine-Learning-Modelle (12, 14, 16) auf mindestens einem Trainingsdatensatz mit einer Mehrzahl von Datenelementen trainiert wird;
b. Anwenden jedes trainierten Machine-Learning-Modells der Mehrzahl der trainierten Machine-Learning-Modelle (12, 14, 16) auf einen gemeinsamen Eingabedatensatz (10) (S2), wobei
der Eingabedatensatz (10) mindestens ein Datenelement aufweist; wobei
das mindestens eine Datenelement mittels Maschinellem Lernen einem Kennzeichen zugeordnet wird;
c. Bestimmen von mindestens einem gekennzeichneten Datenelement aus der Mehrzahl der gekennzeichneten Datenelemente durch das Abstimmungsverfahren auf Basis der Mehrzahl der gekennzeichneten Datenelemente (S3);
d. Ermitteln einer Datenabweichung (20) zwischen dem Eingabedatensatz (10) und dem mindestens einen Trainingsdatensatz (S4);
e. Anpassen des Abstimmungsverfahrens auf Basis des bestimmten mindestens einen gekennzeichneten Datenelements, der Mehrzahl der gekennzeichneten Datenelemente und in Abhängigkeit von der ermittelten Datenabweichung (S5); und
f. Bereitstellen des angepassten Abstimmungsverfahrens (S6).

2. Computer-implementiertes Verfahren nach Anspruch 1, wobei das Machine-Learning-Modell (12, 14, 16) ein Modell zum überwachten Maschinellen Lernen ist, bevorzugt ein Neuronales Netzwerk.

3. Computer-implementiertes Verfahren nach Anspruch 1 oder Anspruch 2, wobei die Mehrzahl der Machine-Learning-Modelle (12, 14, 16) als Ensemble zur Ensemble-Prognose ausgebildet ist.

4. Computer-implementiertes Verfahren nach einem der vorhergehenden Ansprüche, wobei jedes Machine-Learning-Modell (12, 14, 16) für die gleiche Aufgabe und auf Basis eines gemeinsamen Trainingsdatensatzes trainiert wird.

5. Computer-implementiertes Verfahren nach einem der vorhergehenden Ansprüche, wobei der Trainingsdatensatz und/oder der Eingabedatensatz (10) Bilddaten aufweist, das mindestens eine Datenelement ein Bild ist und/oder die Aufgabe eine Objekterkennung ist.

6. Computer-implementiertes Verfahren nach einem der vorhergehenden Ansprüche, wobei das Abstimmungsverfahren auf Maschinellem Lernen basiert und/oder mindestens einen vordefinierten Schwellwert zur Abstimmung verwendet.

7. Computer-implementiertes Verfahren nach einem der vorhergehenden Ansprüche, wobei die Datenabweichung (20) in Form einer Datenabweichungs-Bewertung oder einer Datenabweichungs-Punktzahl vorliegt.

8. Computer-implementiertes Verfahren nach einem der vorhergehenden Ansprüche, wobei die Anpassung des Abstimmungsverfahrens, das Anpassen von mindestens einem Schwellwert des Abstimmungsverfahrens umfasst, wobei der mindestens eine Schwellwert bevorzugt ein Schwellwert für eine Konfidenz und/oder eine Schnittmenge über Vereinigung ist.

9. Computer-implementiertes Verfahren nach einem der vorhergehenden Ansprüche, weiterhin aufweisend:
- Ausgeben des angepassten Abstimmungsverfahrens und/oder zugehöriger Daten auf einer Anzeigeeinheit,
- Speichern des angepassten Abstimmungsverfahrens und/oder zugehöriger Daten in einer Speichereinheit, und/oder
- Übermitteln des angepassten Abstimmungsverfahrens und/oder zugehöriger Daten an eine Recheneinheit.

10. Anpassungsvorrichtung mit mindestens einer elektronischen Recheneinrichtung zum Durchführen des Verfahrens nach einem der vorhergehenden Ansprüche.

11. Computerprogrammprodukt mit einem Computerprogramm, das Mittel zur Durchführung des Verfahrens nach einem der Ansprüche 1 bis 9 aufweist, wenn das Computerprogramm auf einer programmgesteuerten Einrichtung zur Ausführung gebracht wird.

12. Computerlesbares Speichermedium mit zumindest einem Computerprogrammprodukt nach Anspruch 11.
